# EUROPÄISCHE PATENTSCHRIFT

(11) **EP 2 134 889 B1**
(45) Veröffentlichungstag und Bekanntmachung des Hinweises auf die Patenterteilung: **08.06.2011**
(21) Anmeldenummer: 08735775.2
(22) Anmeldetag: 03.04.2008
(51) Int. Cl.: C25D 15/02, C25D 5/50, B82B 3/00

(54) **MATERIALSYSTEM UND VERFAHREN ZUR DESSEN HERSTELLUNG**
MATERIAL SYSTEM, AND METHOD FOR THE PRODUCTION THEREOF
SYSTÈME DE MATÉRIAU ET PROCÉDÉ DE FABRICATION

(30) Priorität: 05.04.2007 DE 102007017380
(43) Veröffentlichungstag der Anmeldung: 23.12.2009
(73) Patentinhaber: Freie Universität Berlin, 14195 Berlin (DE)
(72) Erfinder: LANDAU, Uwe, 14195 Berlin (DE); ZIELONKA, Andreas, 73525 Schwäbisch Gmünd (DE); HAAG, Rainer, 12209 Berlin (DE); KRÄMER, Michael, 77656 Offenburg (DE); VALKOVA, Teodora, 1111 Sofia (BG)
(74) Vertreter: Baumgärtel, Gunnar
(86) Internationale Anmeldenummer: PCT/EP2008/054032
(87) Internationale Veröffentlichungsnummer: WO 2008/122570

(56) Entgegenhaltungen:
- EP-A- 0 748 883
- WO-A-02/087750
- JP-A- 6 308 575
- US-A- 4 764 117
- US-A1- 2004 144 657
- US-A1- 2006 083 926
- G. SINE ET AL.: "Deposition of clusters and nanoparticles onto boron-doped diamond electrodes for electrocatalysis" JOURNAL OF APPLIED ELECTROCHEMISTRY, Bd. 36, 2006, Seiten 847-862, XP002514740
- T. VOSSMEYER ET AL.: "Gold nanaoparticle/polyphenylene dendrimer composite films:preparation and vapor-sensing properties" ADVANCED MATERIALS, Bd. 14, Nr. 3, 5. Februar 2002 (2002-02-05), Seiten 238-242, XP002514741 Weinheim

## Beschreibung

Die Erfindung betrifft ein Materialsystem nach dem Oberbegriff des Anspruchs 1, ein Bauteil nach dem Oberbegriff des Anspruchs 9 und ein Verfahren zur Herstellung eines solchen Materialsystems nach dem Oberbegriff des Anspruchs 10.

Aus dem Stand der Technik sind funktionelle Oberflächen bekannt, die zunehmend zu einem Konstruktionselement werden, über das die Leistungsfähigkeit, aber auch die Kosten von Produkten gestaltet werden. Darüber hinaus liefert die Oberflächenbeschichtung durch ihre materialschonende Verfahrenstechnik bereits heute einen erheblichen Beitrag zur Ressourcenschonung.

Dabei ist die Galvanotechnik nach der Lackiertechnik die wichtigste Oberflächentechnik, die praktisch für alle relevanten Industriebereiche unverzichtbar ist. Die Galvanotechnik kann nach dem aktuellen Stand der Entwicklung unter Verwendung einer äußerst modernen und umweltschonenden Prozesstechnik durchgeführt werden.

Die Automobilindustrie sucht beispielsweise dringend nach neuen Lösungen für die Beschichtung von Steckverbindern (Kontaktbeschichtung), die drei wesentliche Aufgaben erfüllen müssen:
1. Temperaturstabilität der Kontaktbeschichtungen bei Temperaturen oberhalb von 200 °C,
2. geringe Steck- und Ziehkräfte (ständig steigende Polzahlen im Steckverbinder) und
3. insbesondere eine deutlich erhöhte Verschleißbeständigkeit.

Um eine hohe Verschleißbeständigkeit in einem Kraftfahrzeug zu erreichen, sind aufwändige und schwere Kontaktkonstruktionen notwendig, die im Kraftfahrzeug auftretende Vibrationen auffangen und eine Zerstörung der Kontakte der Steckverbinder vermeiden. In einem Mittelklassewagen sind derzeit ca. 200 bis 300 Stecker (entsprechend 2000 bis 3000 Einzelkontakten) verbaut, wobei weltweit jährlich ca. 54 Mio. Kraftfahrzeuge hergestellt werden.

Die Erhöhung der Verschleißfestigkeit der Kontaktbeschichtung ist ein wichtiges Ziel der Automobilindustrie, um neben einer verbesserten Kontaktsicherheit auch Material und damit Gewicht im Kraftfahrzeug einzusparen, denn eine erhöhte Verschleißfestigkeit der Kontaktbeschichtung würde eine erhebliche Verkleinerung und Vereinfachung der aufwändigen Steckerkonstruktionen ermöglichen. Eine Gewichtsreduzierung und die damit verbundene Kraftstoffeinsparung hat heute in der Automobilindustrie allerhöchste Priorität.

Die ständig steigenden Umgebungstemperaturen, insbesondere im Motorraum, und die durch ständig steigende elektrische Leistungsaufnahme entstehende Wärme bringen die heute eingesetzten Kontaktbeschichtungen aus Hartgold und Zinn bereits an die Grenze ihrer Belastbarkeit. Ein erhöhter Verschleiß der Steckkontakte bedeutet erhöhtes Elektronikschrottaufkommen und einen erhöhten Material- und Energieaufwand für die zu ersetzenden Kontakte. Der hohe Grad des Elektronikeinsatzes im Auto setzt, insbesondere bei sicherheitsrelevanten Komponenten, die unbedingte Funktionssicherheit der jeweiligen Kontakte voraus.

Es ist aus dem Stand der Technik bekannt, dass durch die Einlagerung von Partikeln im Mikrometer- und im oberen Nanometer-Bereich die Eigenschaften von Beschichtungswerkstoffen in einem weiten Bereich positiv beeinflusst werden können.

Traditionell konzentriert sich die Dispersionsbeschichtungs-Entwicklung auf den Miteinbau von Hartstoffen (SiC, BN, Al₂O₃, Diamant) und Festschmierstoffen (PTFE, MoS₂, Graphit etc.). Dabei kommen in der Regel Partikelgrößen im Mikrometerbereich zur Anwendung. Derartige Dispersionsschichten werden seit vielen Jahren erfolgreich in der Zylinderbeschichtung von Hochleistungsmotoren sowie in der Elektrotechnik eingesetzt.

Krämer et al. (2004) (Krämer, M., Stumbé, J.-F., Grimm, G., Kaufmann, B., Krüger, U., Weber, M., Haag, R.: "Dendritic polyamines: simple access to new materials with defined treelike structures for application in nonviral gene delivery"; ChemBioChem 5 (2004), 1081-1087) beschreiben verschiedene, teils funktionalisierte dendritische Polyamine als Polymere zur Bildung von Nanopartikeln.

Krämer et al. (2005) (Krämer, M., Pérignon, N., Haag, R., Marty, J.-D., Thomann, R., Lauthde Viguerie, N., Mingotaud, C.: "Water-Soluble Dendritic Architectures with Carbohydrate Shells for the Templation and Stabilization of Catalytically Active Metal Nanoparticles"; Macromolecules 38 (2005), 8308-8315) beschreiben die Möglichkeit, Nanopartikel aus teils funktionalisierten dendritischen Polyaminen als Träger bzw. stabilisierende Hülle für Metallionen bzw. -atome einzusetzen. Dabei weisen die Nanopartikel einen Kern-Schale-Aufbau auf.

Aus der EP 0 748 883 A1 ist ein Teil mit einer galvanisch aufgebrachten, gegen mechanischem Abrieb beständigen Beschichtung sowie ein entsprechendes Herstellungsverfahren bekannt. Dabei sind in eine metallische Schicht der Beschichtung des Teils homogen verteilte Nanopartikel eingelassen, welche mit mindestens einem den Abrieb bzw. die Reibung reduzierenden Stoff chemisch-physikalisch verbunden sind. Die Nanopartikel bestehen dabei beispielsweise aus Metallen oder Metalloxiden.

Der vorliegenden Erfindung liegt die Aufgabe zugrunde, die Eigenschaften eines Materials, insbesondere die einer Beschichtung, unter Einsatz einer geringeren Stoffmenge als aus dem Stand der Technik bekannt positiv zu beeinflussen. Der Erfindung liegt ferner die Aufgabe zugrunde, ein Verfahren zur Herstellung eines entsprechenden Materials mit verbesserten Eigenschaften anzugeben.

Diese Aufgabe wird mit einem Materialsystem mit den Merkmalen des Anspruchs 1 gelöst. Ein solches Materialsystem weist eine Matrix und in die Matrix eingelagerte Nanopartikel auf, wobei die Matrix mindestens ein Matrixmetall aufweist, die Nanopartikel eine durchschnittliche Größe von weniger als 50 nm aufweisen und die Nanopartikel jeweils mindestens einen Funktionsträger aufweisen. Der Funktionsträger dient dabei dazu, die Eigenschaften der Matrix im gewünschten Sinne zu beeinflussen. Darüber hinaus weisen die Nanopartikel jeweils mindestens ein Polymer auf. Dieses Polymer dient dabei insbesondere zur eigentlichen Bildung und Stabilisierung der Nanopartikel. Ein erfindungsgemäßes Materialsystem kann auch als Verbundwerkstoff bezeichnet werden.

Die durchschnittliche Größe der Nanopartikel ist insbesondere mittels Transmissionselektronenmikroskopie (TEM) zu bestimmen und ergibt sich aus dem auf eine Ebene projizierten Durchmesser der Nanopartikel. Je nach Orientierung der Nanopartikel bei einer solchen transmissionselektronenmikroskopischen Aufnahme kann dabei von Fall zu Fall beispielsweise die größte Ausdehnung (Durchmesser) eines Nanopartikels oder die kleinste Ausdehnung eines Nanopartikels beobachtet werden, wobei sich diese Extrema statistisch ausmitteln. Ebenso ist es möglich (und der wahrscheinlich häufigste Fall), dass Durchmesser, die zwischen dem größten und dem kleinsten Durchmesser der Nanopartikel liegen, als Projektion bei einer Größenbestimmung beobachtet werden. Da die Nanopartikel vorzugsweise eine sphärische Gestalt annehmen, sind die Unterschiede zwischen dem größten und dem kleinsten Durchmesser der Nanopartikel verhältnismäßig gering. Idealerweise sind der größte und der kleinste Durchmesser der Nanopartikel identisch.

Vorzugsweise beträgt die durchschnittliche Größe der Nanopartikel weniger als 40 nm, insbesondere weniger als 30 nm und liegt besonders bevorzugt in einem Bereich von 2 bis 20 nm. In diesem Größenbereich werden Nanopartikel in Schichtsystemen beobachtet, die praktisch nur noch aus Oberfläche bestehen und teilweise andere Eigenschaften aufweisen als größere Partikel, die neben einer Oberfläche auch noch ein signifikantes Volumen aufweisen. Damit unterscheiden sich die erfindungsgemäß eingesetzten Nanopartikel signifikant von solchen Nanopartikeln, die eine Größe von 50 bis 100 nm aufweisen.

Vorzugsweise handelt es sich bei dem Polymer der Nanopartikel um ein dendritisch aufgebautes Polymer, wie beispielsweise ein dendritisches Polyamin.

Besonders bevorzugte Polymere sind Polyethylenimin, Polyamidoamin und/oder Polypropylenimin. Dabei ist zu beachten, dass die Nanopartikel nicht notwendigerweise aus einem einzigen Polymer bestehen müssen bzw. dieses aufweisen, sondern auch mehr als ein Polymer aufweisen können.

In einer alternativen Ausgestaltung der Erfindung ist das Polymer mit einer funktionellen Gruppe versehen bzw. funktionalisiert. Im Fall von Polyaminen als verwendeten Polymeren bietet es sich an, die Funktionalisierung an den Aminogruppen des jeweiligen Polyamins durchzuführen.

Die funktionelle Gruppe besteht bevorzugt aus dem Rest einer Kohlenwasserstoffverbindung, insbesondere aus dem Rest von Glycidol, Glucolacton und/oder Lactobionsäure. Alternativ oder zusätzlich kann die funktionelle Gruppe auch ein anderes Polymer, als das, aus dem der Nanopartikel im eigentlichen Sinne besteht, sein. Hierzu eignen sich die bereits oben genannten Polymere wie Polyethylenimin, Polyamidoamin und/oder Polypropylenimin ganz besonders. Die Bezeichnung "Rest einer Kohlenwasserstoffverbindung" bzw. "Rest eines Polymers" soll dabei verdeutlichen, dass das Polymer, welches die Nanopartikel aufweisen, mit einer entsprechenden Kohlenwasserstoffverbindung oder einem entsprechenden Polymer chemisch umgesetzt und kovalent verbunden ist, so dass nicht mehr die vollständige Kohlenwasserstoffverbindung bzw. das vollständige Polymer vorhanden ist, sondern lediglich ein chemisch in ein anderes Molekül integrierter Rest übrig bleibt.

In einer bevorzugten Ausgestaltung der Erfindung weisen die Nanopartikel jeweils einen Kern auf, der zumindest teilweise von einer Schale umgeben ist. Auf diese Weise lassen sich im Inneren des Kerns anzuordnende Funktionsträger besonders gut stabilisieren. Durch eine geeignete Schale kann beispielsweise die Wasserlöslichkeit der Nanopartikel und damit die Löslichkeit der in den Nanopartikeln angeordneten Funktionsträger signifikant erhöht werden. Auch lässt sich die Löslichkeit in einem anderen Lösungsmittel auf diese Weise verbessern.

In einer bevorzugten Ausgestaltung der Erfindung sind sowohl der Kern als auch die Schale aus dem Polymer, welches die Nanopartikel aufweisen, gebildet. Das heißt, allein die spezielle Struktur des Polymers sorgt bereits dafür, dass von einem Kern und einer Schale der einzelnen Nanopartikel gesprochen werden kann. Diese spezielle Struktur des Polymers kommt insbesondere bei der Verwendung von Polyaminen wie beispielsweise Polyethylenimin zum Tragen.

In einer alternativen Ausgestaltung der Erfindung werden der Kern der Nanopartikel aus dem Polymer und die Schale der Nanopartikel aus der funktionellen Gruppe gebildet. Das heißt, je nach Auswahl der funktionellen Gruppe können die Eigenschaften der Nanopartikel unabhängig von und zusätzlich zu den seitens des Polymers vorgegebenen Eigenschaften beeinflusst bzw. angepasst oder verändert werden.

In einer bevorzugten Ausgestaltung der Erfindung ist der mindestens eine Funktionsträger in einem inneren Bereich der Nanopartikel angeordnet. Es ist ausdrücklich angemerkt, dass mehr als ein Funktionsträger, insbesondere nicht nur hinsichtlich der Anzahl, sondern auch hinsichtlich der Art bzw. Eigenschaften, Teil der Nanopartikel sein kann. Beispielsweise ist es denkbar, dass 20 Atome oder Ionen eines ersten Stoffes und 15 Atome oder Ionen eines zweiten Stoffes zusammen die Funktionsträger darstellen, die ein einzelner Nanopartikel aufweist.

In einer bevorzugten Ausgestaltung der Erfindung besteht der mindestens eine Funktionsträger aus einem Metall, d. h., der mindestens eine Funktionsträger wird gebildet aus einem Metallatom oder einem Metallion.

Insbesondere ist es vorteilhaft, wenn das Metall für den Funktionsträger bzw. das Matrixmetall Platin, Gold, Silber, Kupfer, Kobalt, Nickel, Eisen, Zinn und/oder Palladium ist. Sowohl im Falle der Matrix als auch im Falle der Funktionsträger kann dabei mehr als ein Metall gleichzeitig eingesetzt werden. Auf diese Weise lassen sich zahlreiche Matrices mit signifikant unterschiedlichen Eigenschaften bereitstellen. Auch können die Eigenschaften durch das Einbringen heterogen beladener Nanopartikel in unterschiedlicher Art und Weise beeinflussen. Funktionsträger, die aus einem oder mehreren Metall(en) bestehen, dienen dabei insbesondere zur Veränderung der Leitfähigkeit des Matrixmaterials.

Durch das Einbringen von mit Zinn beladenen Nanopartikeln in eine Matrix aus Kupfer (Cunano-Sn) lässt sich Bronze herstellen, die je nach relativem Verhältnis der beiden Metalle zueinander beispielsweise als weiße Bronze oder als gelbe Bronze ausgebildet sein kann.

Auch andere Nanokomposite wie beispielsweise mit Gold beladene Nanopartikel in einer Matrix aus Nickel (Ni-nano-Au), mit Zinn beladene Nanopartikel in einer Matrix aus Silber (Sn-nano-Ag) oder mit Palladium beladene Nanopartikel in einer Matrix aus Silber (Pd-nano-Ag) sind aus den genannten Metallen herstellbar.

In einer alternativen Ausgestaltung der Erfindung ist es vorgesehen, dass der mindestens eine Funktionsträger Siliziumcarbid, Bornitrid, Aluminiumoxid (Al₂O₃) und/oder Diamant ist. Mit solchen Funktionsträgern, die zu besonders harten Materialien zählen, lassen sich die Härteeigenschaften der Matrix beeinflussen. Dabei kommt auch zum Tragen, dass beispielsweise Nanodiamanten ein gegenüber gewöhnlich dimensionierten Diamanten deutlich verbessertes Verschleißverhalten aufweisen, obwohl die Härte der Nanodiamanten nicht von denen der gewöhnlich dimensionierten Diamanten abweicht. Das heißt, durch das Einbringen der Funktionsträger in einem Nanoteilchen lassen sich bestimmte Nanoeigenschaften der jeweiligen für die Funktionsträger verwendeten Materialien zusätzlich ausnutzen.

Um möglichst homogene Eigenschaften des Materialsystems zu erreichen, sind die Nanopartikel vorzugsweise im Wesentlichen gleichmäßig in der Matrix verteilt. Das hat zur Folge, dass auch nach einem Abtrag einer oberen Schicht des Materialsystems die Eigenschaften der darunter liegenden Schicht nicht signifikant von der abgetragenen Schicht abweichen, so dass negative Effekte, wie sie beispielsweise bei einer einfachen Oberflächenbeschichtung auftreten, vermieden werden.

Aus diesem Grund eignet sich das Materialsystem in einer bevorzugten Ausgestaltung der Erfindung besonders zur Beschichtung eines Substrats. Die gemäß der Erfindung erzeugten Materialsysteme können auch auf industrielle Beschichtungssysteme (z.B. Bandgalvaniksysteme) übertragen und beispielsweise in Steckverbindersystemen als Kontaktwerkstoffe eingesetzt werden. Dies ermöglicht eine Gewichtsreduktion von Steckverbindern, reduziert den Material- und Energieaufwand im Vergleich zu konventionellen Kontaktsystemen und gibt neue Impulse bei der Einführung neuer Antriebssysteme, beispielsweise der Hybridtechnologie.

Ein erfindungsgemäßes Materialsystem wird vorzugsweise zur Beschichtung eines insbesondere elektrischen oder elektronischen Bauteils eingesetzt, um dessen Eigenschaften bezüglich der Leitfähigkeit, der Härte und/oder weiterer Parameter in gewünschter Weise zu beeinflussen.

Vorzugsweise handelt es sich bei dem insbesondere elektronischen Bauteil um einen elektrisch leitfähigen Abschnitt eines Steckers, insbesondere um einen Kontaktabschnitt eines Steckers.

Neben den Anwendungen der erfindungsgemäßen Materialsysteme im Bereich der Elektrotechnik und Elektronik, können diese auch für die Beschichtung von Substraten eingesetzt werden, mit dem Ziel, die mechanischen Eigenschaften, wie z.B. Härte und Verschleißbeständigkeit, zu verbessern.

Die der Erfindung zugrunde liegende Aufgabe wird auch durch ein Verfahren zur Herstellung eines Materialsystems auf einem Substrat gemäß den Merkmalen des Anspruchs 10 gelöst. Ein derartiges Verfahren umfasst die Schritte des Bereitstellens eines Substrats, des Bereitstellens einer Elektrolytlösung, welche Ionen eines Matrixmetalls aufweist, des Herstellens von Nanopartikeln, wobei die Nanopartikel eine durchschnittliche Größe von weniger als 50 nm aufweisen, des Beladens der Nanopartikel mit mindestens einem Funktionsträger, des Versetzens der Elektrolytlösung mit den beladenen Nanopartikeln, des Eintauchens des Substrats in die mit den beladenen Nanopartikeln versetzte Elektrolytlösung und des Abscheidens der in der Elektrolytlösung enthaltenen Ionen des Matrixmetalls und der beladenen Nanopartikel als Materialsystem auf dem Substrat. Diese Abscheidung erfolgt dabei vorzugsweise elektrolytisch bzw. galvanisch. Die einzusetzenden Nanopartikel weisen vorzugsweise die oben beschriebenen vorteilhaften Ausgestaltungen auf.

Damit die Nanopartikel besonders gut hergestellt werden können, liegt die Konzentration des Polymers vorzugsweise zwischen 1 Mol pro Liter und 10⁻⁷ Mol pro Liter, insbesondere zwischen 10⁻³ Mol pro Liter und 10⁻⁶ Mol pro Liter und ganz besonders zwischen 10⁻⁴ Mol pro Liter und 10⁻⁵ Mol pro Liter.

Um eine Beladung der gebildeten Nanopartikel mit dem Funktionsträger in besonders vorteilhafter Weise zu ermöglichen, liegt das Verhältnis zwischen dem Polymer und dem Funktionsträger bei der Beladung vorzugsweise in einem Bereich zwischen 1:1 und 1:100. Dabei bezeichnet der Begriff "Verhältnis" ein Verhältnis der Konzentrationen der jeweiligen Substanzen. Bei einem Verhältnis von 1:1 werden die gleichen Konzentrationen an Polymer und an Funktionsträger eingesetzt, bei einem Verhältnis von 1:100 werden die Funktionsträger in einem hundertfachen Konzentrationsüberschuss gegenüber der Konzentration des Polymers eingesetzt. Besonders bevorzugte Konzentrationsverhältnisse zwischen dem Polymer und dem Funktionsträger liegen in einem Bereich zwischen 1:10 und 1:50, insbesondere in einem Bereich zwischen 1:20 und 1:40 und ganz besonders in einem Bereich zwischen 1:24 und 1:30. Dabei schließt eine Formulierung unter Verwendung des Begriffs "zwischen" an dieser Stelle wie auch an den vorangehenden und nachfolgenden Stellen der vorliegenden Erfindungsbeschreibung und in den Ansprüchen die jeweils genannten oberen und unteren Grenzwerte mit ein.

Besonders stabile Nanopartikel können dadurch erhalten werden, dass die Herstellung der Nanopartikel in einer Lösung mit einem pH-Wert zwischen 1 und 14, insbesondere zwischen 5 und 11 und ganz besonders bei einem pH-Wert bei rund 10 (beispielsweise bei pH 9,8 bis pH 10,2) erfolgt. Der jeweils besonders vorteilhafte pH-Wert der Lösung hängt von dem Polymer, das zur Bildung der Nanopartikel eingesetzt wird, ab.

Besonders stabile und zur Aufnahme von Funktionsträgern geeignete Nanopartikel können dadurch erhalten werden, dass das Polymer ein mittleres Molekulargewicht zwischen 2 und 100 kDa, insbesondere zwischen 5 und 50 kDa und ganz besonders zwischen 20 und 30 kDa aufweist. Ein mittleres Molekulargewicht von ca. 25 kDa ist besonders bevorzugt.

Um für eine gute Stabilität der Nanopartikel, insbesondere der mit den Funktionsträgern beladenen Nanopartikel zu sorgen, weist die Elektrolytlösung vorzugsweise einen pH-Wert zwischen -1 und 14, insbesondere zwischen 0 und 13 und ganz besonders zwischen 2 und 8 auf. Für bestimmte Systeme hat sich beispielsweise ein pH-Wert von 4 bis 5 als besonders vorteilhaft erwiesen.

Um eine besonders vorteilhafte Abscheidung der beladenen Nanopartikel zusammen mit den Metallionen der Elektrolytlösung auf dem Substrat zu erreichen, liegt das Konzentrationsverhältnis zwischen dem Polymer und dem Funktionsträger bei der Abscheidung bevorzugterweise in einem Bereich zwischen 1:1 und 1:100, insbesondere in einem Bereich zwischen 1:10 und 1:40, wobei sich ein Bereich zwischen 1:20 und 1:30 und ein Bereich von 1:23 bis 1:25, insbesondere ein Verhältnis von ca. 1:24 als besonders vorteilhaft herausgestellt haben.

Die Abscheidung der beladenen Nanopartikel und der Metallionen der Elektrolytlösung als Metallatome der Matrix auf dem Substrat kann besonders vorteilhaft dann erfolgen, wenn die zur Abscheidung verwendete Stromdichte in einem Bereich zwischen 0,1 und 20 A/dm², insbesondere zwischen 0,2 und 10 A/dm² und ganz besonders zwischen 0,25 und 8 A/dm² liegt. Zum Erreichen der vorgenannten bevorzugten Stromdichten sind je nach Abstand der zur Abscheidung eingesetzten Elektroden unterschiedliche Spannungen notwendig.

Um das Abscheiden der beladenen Nanopartikel und der Metallionen der Elektrolytlösung auf dem Substrat besonders vorteilhaft durchführen zu können, wird das Abscheiden vorzugsweise bei einer Temperatur zwischen 5 und 95 °C, insbesondere zwischen 15 und 70 °C und ganz besonders zwischen 30 und 50 °C durchgeführt.

Die Abscheidung der erfindungsgemäßen Materialsysteme kann unter einer Relativbewegung zwischen dem Substrat und der Elektrolytlösung erfolgen. Vorzugsweise kann die Relativgeschwindigkeit zwischen Elektrolytlösung und Substrat 0 bis 15 m/s, insbesondere 0,1 bis 5 m/s und ganz besonders 0,1 bis 2m/s betragen.

In einer bevorzugten Ausgestaltung der Erfindung bildet das Substrat eine Elektrode, die ein Metall aufweist. Dabei kann die Elektrode teilweise oder vollständig aus dem Metall gefertigt sein.

Als Metall bieten sich dabei insbesondere Platin, Gold, Silber, Kupfer, Kobalt, Nickel, Eisen, Zinn und/oder Palladium sowie deren Legierungen an. Es ist denkbar, dass die Elektrode bzw. das Substrat aus mehr als einem Metall besteht.

Vorzugsweise wird das Verfahren zur Beschichtung eines Bauteils, das eine funktionelle Beschichtung, das heißt eine funktionsvermittelnde Beschichtung, aufweisen soll, angewandt. Es kann beispielsweise für elektrische oder elektronische Bauteile angewandt werden. Das Bauteil kann beispielsweise ein elektrisch leitfähiger Abschnitt eines Steckers sein.

Um die Materialeigenschaften des auf dem Substrat abgeschiedenen Materialsystems besonders vorteilhaft gestalten zu können, weist das Verfahren in einer bevorzugten Ausgestaltung der Erfindung noch einen zusätzlichen Schritt der Nachbehandlung auf, der sich an den Schritt des Abscheidens anschließt. In diesem Schritt der Nachbehandlung kann die Lage der in die Matrix eingebetteten beladenen Nanopartikel sowie ihre Phasenbildung mit dem Matrixmetall nachträglich insbesondere durch Diffusion verändert werden. Dies ist insbesondere dann möglich, wenn mit Zinn beladene Nanopartikel in einer Matrix aus Kupfer eingelagert sind.

Vorzugsweise wird die Nachbehandlung als thermische Nachbehandlung ausgeführt, wozu das auf dem Substrat abgeschiedene Materialsystem auf eine Temperatur oberhalb der Raumtemperatur erwärmt wird.

Besonders vorteilhafte Temperaturen für die thermische Nachbehandlung liegen im Bereich zwischen 60 °C und 1000 °C, insbesondere zwischen 100 °C und 700 °C und ganz besonders zwischen 200 °C und 600 °C.

Damit eine Nachbehandlung nicht über die gesamte Erstreckungsfläche des Materialsystems durchgeführt werden muss, sondern nur an besonders relevanten Stellen erfolgt, wird die thermische Nachbehandlung in einer bevorzugten Ausgestaltung lediglich in einem lokal begrenzten Bereich des abgeschiedenen Materialsystems durchgeführt.

Sowohl eine lokal begrenzte als auch eine nicht lokal begrenzte thermische Nachbehandlung lässt sich besonders leicht mittels eines Lasers bewerkstelligen, wobei aufgrund der zahlreichen auf dem Markt erhältlichen Laser thermische Nachbehandlungen mit unterschiedlichen Energieeinträgen in das Materialsystem besonders einfach realisierbar sind.

Die Kombination elektrochemischer Abscheideverfahren und stabiler maßgeschneiderter Kern-Schale-Nanopartikel ermöglicht die Herstellung von neuartigen Materialkombinationen, die sich auf anderen Wegen nicht oder nur mit hohem Aufwand herstellen lassen. Die große Variationsbreite der verfügbaren Kern-Schale-Systeme ermöglicht eine gezielte Anpassung an unterschiedlichste Elektrolytsysteme und eröffnet die Möglichkeit zur Herstellung von Metallkompositmaterialien in großer Vielfalt. Von besonderer Bedeutung ist dabei die Möglichkeit, Materialien weit entfernt vom thermodynamischen Gleichgewicht und damit in einem erweiterten Eigenschaftsspektrum herzustellen.

Dabei macht man sich auch den Templateffekt bei der Wechselwirkung zwischen dem Funktionsträger (insbesondere, wenn dieser ein Metall ist) und dem Nanopartikel zu Nutze. Als Templateffekt wird hierbei ein durch den Funktionsträger verursachter geometrischer "Abdruck" im Nanopartikel (bzw. in dem Polymer, das diesen bildet) verstanden, mittels dessen die Liganden für den Funktionsträger auf Seiten des Polymers komplexgerecht angeordnet werden.

Weitere Vorteile und Einzelheiten der Erfindung sollen anhand nachfolgender Beschreibung anhand eines Ausführungsbeispiels und entsprechender Figuren näher erläutert werden. Es zeigen:
- Fig. 1: eine schematische Darstellung der Herstellung eines Funktionsträgern beladenen Nanopartikels, der im Rahmen der Erfindung einzusetzen ist,
- Fig. 2: die chemische Struktur eines ersten Ausführungsbeispiels eines Polymers,
- Fig. 3: die Reaktionsgleichung zur Herstellung eines zweiten Ausführungsbeispiels eines Polymers ausgehend von dem in der Fig. 2 dargestellten Polymer,
- Fig. 4A: eine elektronenmikroskopische Aufnahme eines Querschnitts durch ein Ausführungsbeispiel eines Materialsystems gemäß der Erfindung und
- Fig. 4B: eine schematische Darstellung der elektronenmikroskopischen Aufnahme der Fig. 4A.

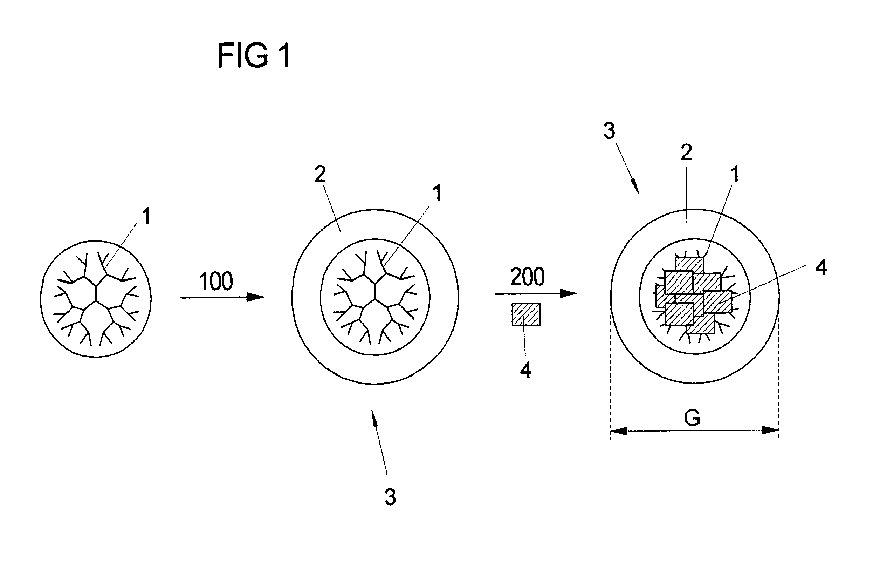

Die Figur 1 zeigt ein dendritisches Polyamin als Polymer 1, wobei die sphärischen Abmessungen im Raum des Polymers 1 durch einen um das Polymer 1 gezeichneten Kreis angedeutet sind.

In einem ersten Reaktionsschritt 100 wird das Polymer 1 an seinen reaktiven Zentren mit einer Vielzahl von Molekülen einer funktionellen Gruppe 2 versehen. Die funktionellen Gruppe werden dabei kovalent an das Polymer 1 gebunden, was in der Fig. 1 nicht explizit dargestellt ist. Nach Funktionalisierung des Polymers 1 bildet das Polymer 1 den Kern eines Nanopartikels 3, während die funktionelle Gruppe(n) 2 die Schale des Nanopartikels 3 bildet.

In einem zweiten Reaktionsschritt 200 werden Metallpartikel 4 (Metallionen bzw. -atome) als Funktionsträger zu einer Lösung der Nanopartikel 3 hinzu gegeben. Durch diesen zweiten Reaktionsschritt 200 lagern sich die Metallpartikel 4 im Innern des Nanopartikels 3, genauer gesagt innerhalb des Polymers 1 ein. Dadurch werden die Metallpartikel 4 derart durch den Nanopartikel 3 stabilisiert, dass sie auch unter Bedingungen, unter denen sie normalerweise ausfallen würden und nicht in löslicher Form vorlägen, löslich gehalten werden können.

Der Nanopartikel 3 weist dabei eine Größe G auf, die der Projektion seines mittleren Durchmessers auf eine Ebene entspricht. Die Größe kann beispielsweise mittels Transmissionselektronenmikroskopie festgestellt werden. Die Größe G des Nanopartikels 3 beträgt in diesem Ausführungsbeispiel 5 bis 20 Nanometer.

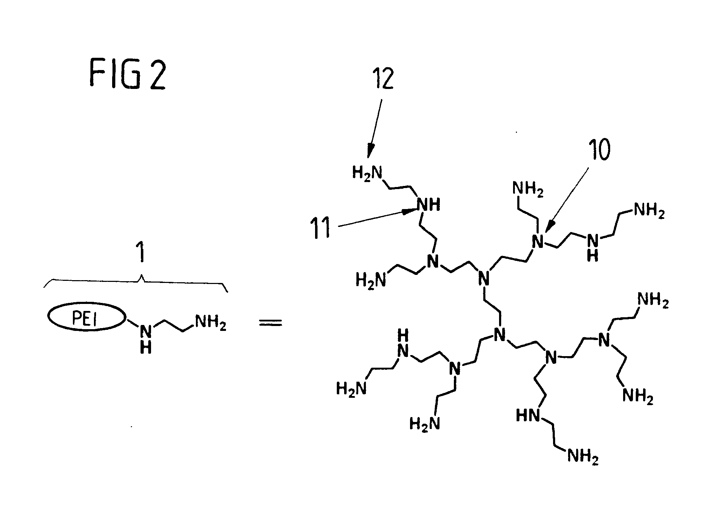

Die Figur 2 zeigt die chemische Struktur von Polyethylenimin (PEI) als Beispiel für das Polymer 1. Das Polyethylenimin weist in seinem Inneren dendritische Einheiten 10 bestehend aus tertiären Aminen auf, die miteinander verknüpft sind. Von den dendritischen Einheiten 10 ist zur besseren Übersichtlichkeit nur eine dendritische Einheit 10 mit dem entsprechenden Bezugszeichen gekennzeichnet.

An die dendritischen Einheiten 10 schließen sich weiter nach außen in der Struktur des Polyethylenimins lineare Einheiten 11 bestehend aus sekundären Amingruppen an, von denen wiederum nur eine einzige lineare Einheit 11 mit dem entsprechenden Bezugszeichen gekennzeichnet ist.

An die linearen Einheiten 11 schließen sich weiter nach außen in der Struktur des Polyethylenimins terminale Einheiten 12 bestehend aus jeweils einem primären Amin an, von denen ebenfalls nur eine terminale Einheit 12 zur besseren Übersichtlichkeit in der Struktur der Fig. 2 mit dem entsprechenden Bezugszeichen gekennzeichnet ist.

Die terminalen Einheiten 12 eignen sich besonders zur Funktionalisierung des gesamten Polyethylenimins durch entsprechende funktionelle Gruppen. Wie aus der Struktur der Fig. 2 erkennbar ist, bildet das Polyethylenimin allerdings bereits ohne Funktionalisierung voneinander unterscheidbare Raumbereiche. So lassen sich die dendritischen Einheiten 10 auch als Kern des Polyethylenimins, und die terminalen Einheiten 12 als Schale des Polyethylenimins auffassen, während die linearen Einheiten 11 als intermediäre Einheiten zu verstehen sind.

Das heißt, ein aus dem Polyethylenimin gebildeter Nanopartikel weist bereits ohne Funktionalisierung des Polyethylenimins einen Kern (bestehend aus den dendritischen Einheiten 10) und eine Schale (bestehend aus den terminalen Einheiten 12) auf. Unter Bezugnahme auf die Fig. 1 lässt sich ein dendritischer Nanotransporter in Form eines Kern-Schale-Systems bereits ohne ersten Reaktionsschritt 100 erstellen. Ein solcher Nanotransporter bzw. Nanopartikel 3 könnte folglich ohne weitere Funktionalisierung direkt mit entsprechenden Metallpartikel 4 beladen werden.

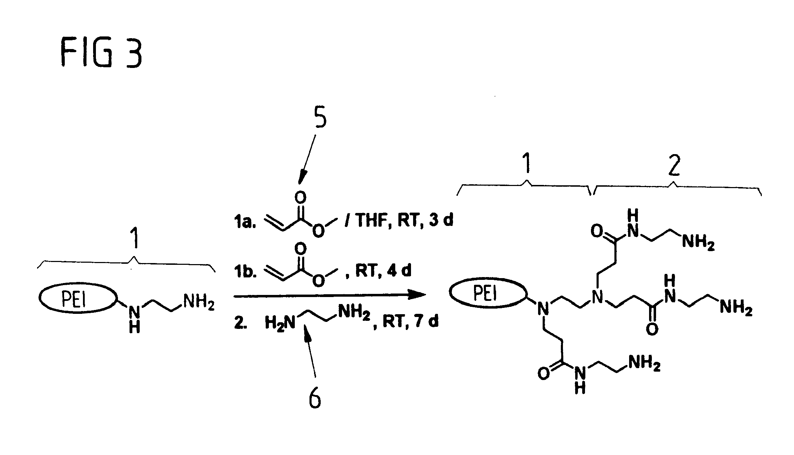

Die Figur 3 zeigt die Reaktionsgleichung einer Funktionalisierung des aus der Figur 2 bekannten Polyethylenimins als Polymer 1 durch Acrylsäuremethylester 5 in einem ersten und einem zweiten Teilschritt einer ersten Funktionalisierungsreaktion und mit Ethylendiamin 6 in einer zweiten Funktionalisierungsreaktion. Das letztlich erhaltene Produkt ist ein Polyethylenimin-polyamidoamin (PEI-PAMAM), bei dem der Polyethyleniminrest als Polymer 1 und die Polyamidoaminreste als funktionelle Gruppe 2 dienen. In einem entsprechenden Nanopartikel bildet dabei der Polyethyleniminrest den Kern und die Polyamidoaminreste die Schale des Nanopartikels.

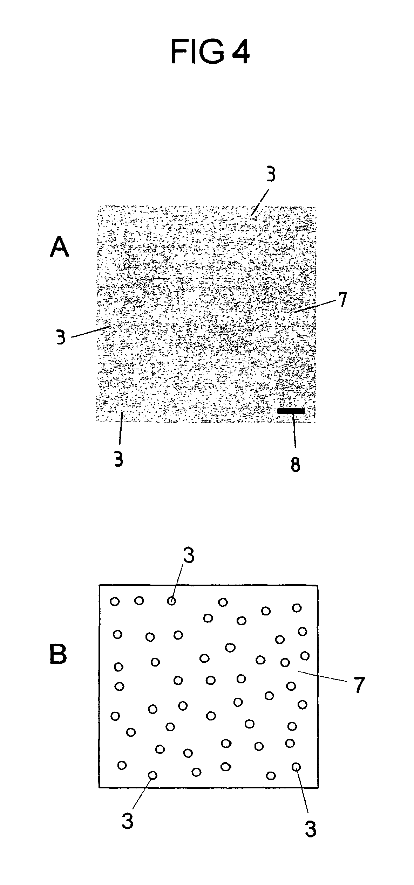

Die Figur 4A zeigt eine elektronenmikroskopische Aufnahme eines Schnitts durch ein Materialsystem gemäß einem Ausführungsbeispiel der Erfindung. Dieses Materialsystem besteht aus einer Nickelmatrix 7 als Matrix und in der Nickelmatrix 7 im Wesentlichen homogen verteilten Nanopartikeln 3. Die Nanopartikel 3 weisen dabei eine durchschnittliche Größe, d. h. einen durchschnittlichen projizierten Durchmesser, von rund 2 bis 20 Nanometer auf, wie anhand des 200 Nanometer messenden Maßbalkens 8 im unteren rechten Bereich der Fig. 4A abgeschätzt werden kann.

Zur besseren Übersichtlichkeit sind von den zahlreichen in der Nickelmatrix 7 eingebetteten Nanopartikeln 3 nur einige wenige mit den entsprechenden Bezugszeichen versehen. Einige größer erscheinenden Nanopartikel 3, stellen keine einzelnen Nanopartikel 3 dar, sondern eine Aggregation mehrerer einzelner Nanopartikel 3. Das in der Fig. 4A dargestellte elektronenmikroskopische Bild eines Materialsystems stellt eine im Wesentlichen gleichmäßige Verteilung von Nanopartikel 3 innerhalb einer Matrix 7 im Sinne der vorliegenden Erfindung dar.

Die Fig. 4B ist eine schematische Darstellung eines Ausschnitts aus der Fig. 4A und zeigt auf schematische Weise die im Wesentlichen gleichmäßige Verteilung der Nanopartikel 3, von den wiederum nur einige wenige mit dem entsprechenden Bezugszeichen versehen sind, in der Nickelmatrix 7.

### Beispiel 1

### Synthese von Polethylenimin-polyamidoamin (PEI-PAMAM)

Neben unfunktionalisiertem Polyethylenimin (PEI) lässt sich mit Polyamidoamin funktionalisiertes PEI (PEI-PAMAM) als funktionalisiertes Polymer zur Herstellung von Nanopartikeln verwenden.

Als Ausgangsmaterial eignen sich eine Vielzahl PEls mit unterschiedlichen durchschnittlichen Molekulargewichten, beispielsweise mit einem durchschnittlichen Molekulargewicht von 5 kDa oder von 25 kDa.

Solche PEI-PAMAM-Polymere lassen sich im Multigrammansatz in Mengen von größer als 100 g herstellen. Die Rate der Funktionalisierung nach dem zweiten Reaktionsschritt (vgl. Figur 3) des PEI mit dem PAMAM beträgt ca. 90 % und kann analog zu Dendrimeren als vollständig verzweigt angesehen werden, da auch diese Defektstrukturen enthalten.

PEI-PAMAM ist beispielsweise in Wasser, Methanol und Ethanol löslich, so dass sich für Nanopartikel aus PEI-PAMAM eine Vielzahl von Anwendungsmöglichkeiten in unterschiedlichen Lösungsmitteln ergeben.

Zur Herstellung von PEI-PAMAM wird in einer ersten Reaktionsstufe zu einer Mischung aus 50 ml (0,55 mol) Acrylsäuremethylester und 25 ml Tetrahydrofuran (THF) eine Lösung aus 5 g PEI (23,3 mmol • g⁻¹ N-H) in 80 ml THF und einigen Millilitern Methanol bei Raumtemperatur (RT) innerhalb einer Stunde zugetropft.

Nach 3 Tagen wird das Lösungsmittel entfernt und das Polymer in weiteren 15 ml Acrylsäuremethylester 4 oder 5 Tage bei RT gerührt. Das Lösungsmittel wird anschließend abkondensiert und das Rohprodukt, welches in einer Ausbeute von 95 % als leicht gelbes Öl erhalten wird, ohne Reinigung für eine nachfolgende zweite Reaktionsstufe verwendet.

Das Rohprodukt lässt sich mit Infrarotspektroskopie (IR) anhand folgender Bande im IR-Spektrum charakterisieren: ṽ (cm⁻¹) = 1735 (C=O).

Das Rohprodukt lässt sich mittels kernmagnetischer Resonanzspektroskopie (NMR) mittels folgender Resonanzen charakterisieren (die resonanzverursachenden Gruppen bzw. Atome sind unterstrichen dargestellt):
¹H NMR (300 MHz, CDCl₃): δ (ppm) = 2,33 [PEI-CH₂-CH₂COOCH₃], 2,2-2,5 [PEI-CH₂-CH₂ COO-CH₃], 2,67 [PEI-CH₂-CH₂-COO-CH₃], 3,55 [PEI-CH₂-CH₂-COO-CH₃];
¹³C NMR (75,4 MHz, CDCl₃): δ (ppm) = 32,4 [PEI-CH₂-CH₂-COO-CH₃], 49,6 und 50,1 [PEI-CH₂-CH₂-COO-CH₃], 51,3 [PEI-CH₂-CH₂-COO-CH₃], 51-55 [PEI-CH₂-CH₂-COO-CH₃], 172,6 [PEI-CH₂-CH₂-COO-CH₃]

In der zweiten Reaktionsstufe wird das Rohprodukt (welches 116,5 mmol Estergruppen enthält) in 50 ml THF gelöst und bei RT innerhalb zwei Stunden zu 150 ml (2,25 mol) Ethylendiamin zugetropft. Das THF wird bei leichtem Unterdruck entfernt und das Reaktionsgemisch eine Woche bei RT gerührt.

Das Ethylendiamin wird anschließend abkondensiert und das Rohprodukt 36 Stunden in Methanol dialysiert (unter zweimaligem Wechsel des Lösungsmittels). Die vereinigten Dialyseschlauchinhalte werden bei 40°C Wasserbadtemperatur entfernt und das PEI-PAMAM als klebriges, schwach gelb gefärbtes Produkt erhalten (Ausbeute nach Dialyse: 87%).

Das Produkt kann mittels folgender Banden bzw. Resonanzen charakterisiert werden (die resonanzverursachenden Gruppen bzw. Atome sind wiederum unterstrichen dargestellt):
IR: ṽ (cm⁻¹) = 1640 (C=O);
¹H NMR (300 MHz, D₂O): δ (ppm) = 2,28 [PEI-CH₂-CH₂-CONH-CH₂-CH₂-NH₂], 2,4-2,8 [PEI-CH₂-CH₂-CONH-CH₂-CH₂-NH₂], 2,56 [PEI-CH₂-CH₂-CONH-CH₂-CH₂-NH₂], 2,66 [PEI-CH₂-CH₂-CONH-CH₂-CH₂-NH₂], 3,08 [PEI-CH₂-CH₂-CONH-CH₂-CH₂-NH₂];
¹³C NMR (75,4 MHz, CD₃OD, inverse gated): δ (ppm) = 35,0 [N(T_{2xPAMAM}),N(L)-CH₂-CH₂-CONH-CH₂-CH₂-NH₂], 36,9 [Defekt, N(T_{1xPAMAM})-CH₂-CH₂-CONH-CH₂-CH₂-NH₂], 40,4 [PEI(T_{unreagiert})], 42,4 [PEI-CH₂-CH₂-CONH-CH₂-CH₂-NH₂], 43,4 [PEI-CH₂-CH₂-CONH-CH₂-CH₂-NH₂], 47,0 [Defekt, N(T_{1x,PAMAM})-CH₂-CH₂-CONH-CH₂-CH₂-NH₂], 50-55 [PEI-CH₂-CH₂-CONH-CH₂-CH₂-NH₂], 176,8 [PEI-CH₂-CH₂-CONH-CH₂-CH₂-NH₂].

### Beispiel 2

### Beladung der Nanopartikel mit Gold

Aus gemäß Beispiel 1 hergestelltem PEI-PAMAM werden Nanopartikel gebildet. Prinzipiell sind auch andere Polymere für die Herstellung von mit Gold beladenen Nanopartikeln geeignet, wobei beispielsweise PEI mit einem durchschnittlichen Molekulargewicht von 25 kDa besser geeignet ist als PEI mit einem durchschnittlichen Molekulargewicht 5 kDa. Im Vergleich zu unfunktionalisiertem PEI ist bei gemäß Beispiel 1 hergestelltem PEI-PAMAM jedoch eine größere Stabilität der Nanopartikel zu beobachten.

Die gelösten Nanopartikel, das heißt die Polymerlösung, werden mit einer Goldlösung vermischt. Ein nach Zugabe der Goldlösung zur Polymerlösung gebildeter Niederschlag löst sich nach 3-4 Tagen wieder auf. Die Konzentration des nanopartikulären Polymers beträgt 5 • 10⁻⁴ mol • l⁻¹. Das Konzentrationsverhältnis zwischen Polymer und Gold beträgt rund 1:24 und der pH-Wert der Polymerlösung ca. 10.

Es werden rote Lösungen ohne Zugabe eines Reduktionsmittels erhalten, was auf die Oxidation der Amingruppen zurückgeführt werden kann. Das Gold baut sich in überwiegend atomarer Form in die Nanopartikel ein. Die mit Gold beladenen Nanopartikel sind in Elektrolytlösungen in einem pH-Bereich von -1 bis 14 stabil. Höher konzentrierte Polymerlösungen bedingen ein kleineres Polymer-zu-Gold-Verhältnis oder haben eine geringere Langzeitstabilität der mit Gold beladenen Nanopartikel zur Folge (unter günstigen Bedingungen sind die mit Gold beladenen Nanopartikel über mehrere Wochen oder Monate stabil).

### Beispiel 3

### Elektrolytische Abscheidung mit Gold beladener Nanopartikel

Es werden einige Milliliter der mit Gold beladenen Nanopartikel enthaltenen Lösung aus Beispiel 2 zu einem Nickelelektrolyt zugegeben. Das Konzentrationsverhältnis von Polymer zu Gold beträgt 1:24. Die Konzentration der verwendeten Polymerlösung beträgt 6.25 10⁻⁴ mol. I⁻¹. Die mit Gold beladenen Nanopartikel sind im Nickelelektrolyt bei einer 1:1-Mischung zwischen Nanopartikeln und Nickelelektrolyt und einem pH-Wert von 4-5 stabil.

Die Abscheidung der Nickelionen als Nickelatome (zur Bildung der Matrix) zusammen mit den mit Gold beladenen Nanopartikeln erfolgt an einer Kupferelektrode als Substrat bei einer Stromdichte von 5 A/dm² und einer Temperatur von 40 °C.

Zur gleichmäßigen Abscheidung über die gesamte Oberfläche der Kupferelektrode wird die Kupferelektrode mit einer Rotationsgeschwindigkeit von ca. 2 000 U/min in der Nickelelektrolytlösung, welche die mit Gold beladenen Nanopartikel enthält, bewegt bzw. rotiert. Das Ergebnis der gleichmäßigen Abscheidung ist aus Figur 4 ersichtlich.

Während übliche Beschichtungen aus Gold (mit einem Kobalt-Anteil von üblicherweise 0,8 %) auf einem Substrat (beispielsweise aus Kupfer) Schichtdicken von ca. 0,8 µm aufweisen, lassen sich gemäß einer Ausführungsform der Erfindung Nickelbeschichtungen mit einer Schichtdicke von 1,2 µm herstellen, in der mit Gold beladene Nanopartikel gleichmäßig verteilt sind. Dadurch wird der Materialbedarf an Gold um ein Vielfaches reduziert. Die homogene nanopartikuläre Goldverteilung in Metallmatrixsystemen bewirkt folglich eine enorme Materialeinsparung, da teils mit wesentlich dünneren Schichten, insbesondere aber mit weniger Edelmetall der gleiche oder sogar ein besserer Effekt wie mit einer klassischen Goldbeschichtung erzielt werden kann.

Darüber hinaus wirken dünne Goldschichten wie eine Trockenschmierschicht. Bei einem sukzessiven Abrieb der Nickelschicht, die mit mit Gold beladenen Nanopartikeln durchsetzt ist, ändert sich die Eigenschaft der Nickelschicht hinsichtlich dieses Trockenschmiereffekts, aber auch hinsichtlich des Leitfähigkeitswerts nicht. Ein solcher sukzessiver Abrieb kann beispielsweise dadurch erfolgen, dass sich ein Stecker in einer den Stecker aufnehmenden Kupplung durch Vibrationen oder ähnliches hin- und herreibt.

Mit Materialsystemen gemäß der Erfindung kann insbesondere die Herstellung neuartiger funktioneller Oberflächen erreicht werden. Dabei ist eine Eigenschaftsoptimierung besonders bezüglich Verschleiß, Härte, Steckkraft, Übergangswiderstand, Temperaturbeständigkeit vorgesehen. Diese Eigenschaften haben beispielsweise wesentliche Auswirkungen auf das Gewicht, Langzeitstabilität, Funktionssicherheit sowie den Materialeinsatz in allen mobilen Elektronikanwendungen. Beispielsweise kann durch Gewichtsreduktion von Steckverbindern eine erhebliche Kraftstoffeinsparung bei einem Kraftfahrzeug erreicht werden. Ein geringerer Verschleiß und die damit verbundene erhöhte Lebensdauer der Steckkontakte vermindert das Elektronikschrottaufkommen und reduziert den Material- und Energieaufwand für die zu ersetzenden Kontakte.

Am Ausführungsbeispiel der Erfindung im Bereich der Steckverbinder kann beispielhaft das Potenzial erfindungsgemäßer Materialsysteme veranschaulicht werden, wobei eine Übertragung entsprechender Resultate auf nahezu alle elektrochemisch erzeugten Metallsysteme denkbar ist. Neben der Bildung von mehrphasigen Systemen kann durch den Einsatz von mit Metallen beladenenen Nanopartikeln die Herstellung von granularen Systemen, dispersionsgehärteten Kompositmaterialien sowie durch Phasenbildung erzeugten mehrkomponentigen Legierungssystemen ermöglicht werden.

### Bezugszeichenliste

- 1: Polymer
- 2: Funktionelle Gruppe
- 3: Nanopartikel
- 4: Metallpartikel
- 5: Acrylsäuremethylester
- 6: Ethylendiamin
- 7: Nickelmatrix
- 8: Maßbalken
- 10: Dendritische Einheit
- 11: Lineare Einheit
- 12: Terminale Einheit
- 100: Erster Reaktionsschritt
- 200: Zweiter Reaktionsschritt
- G: Größe des Nanopartikels

## Patentansprüche

1. Materialsystem mit einer Matrix (7) und darin eingelagerten Nanopartikeln (3), wobei
• die Matrix (7) mindestens ein Matrixmetall aufweist,
• die Nanopartikel (3) eine durchschnittliche Größe von weniger als 50 nm aufweisen,
• die Nanopartikel (3) jeweils mindestens einen Funktionsträger (4) aufweisen, der ein Metall, Siliciumcarbid, Bornitrid, Aluminiumoxid und/oder Diamant ist, und
• die Nanopartikel (3) jeweils mindestens ein Polymer (1) aufweisen.

2. Materialsystem nach Anspruch 1, **dadurch gekennzeichnet, dass** das Polymer (1) ein dendritisch aufgebautes Polymer ist.

3. Materialsystem nach Anspruch 1 oder 2, **dadurch gekennzeichnet, dass** das Polymer (1) Polyethylenimin, Polyamidoamin und/oder Polypropylenimin ist.

4. Materialsystem nach einem der Ansprüche 1 bis 3, **dadurch gekennzeichnet, dass** das Polymer (1) eine funktionelle Gruppe (2) aufweist.

5. Materialsystem nach Anspruch 4, **dadurch gekennzeichnet, dass** die funktionelle Gruppe (2) aus dem Rest einer Kohlenwasserstoffverbindung, insbesondere aus dem Rest von Glycidol, Gluconolacton und/oder Lactobionsäure, und/oder aus dem Rest eines Polymers, insbesondere aus Polyethylenimin, Polyamidoamin und/oder Polypropylenimin, besteht.

6. Materialsystem nach einem der Ansprüche 1 bis 5, **dadurch gekennzeichnet, dass** die Nanopartikel (3) jeweils einen Kern aufweisen, der zumindest teilweise von einer Schale umgeben ist.

7. Materialsystem nach Anspruch 6, **dadurch gekennzeichnet, dass** der Kern und die Schale aus dem Polymer (1) gebildet sind.

8. Materialsystem nach Anspruch 6, **dadurch gekennzeichnet, dass** der Kern aus dem Polymer (1) und die Schale aus der funktionellen Gruppe (2) gebildet ist.

9. Bauteil, insbesondere elektrisches oder elektronisches Bauteil, mit einer Beschichtung, die ein Materialsystem nach einem der Ansprüche 1 bis 8 aufweist.

10. Verfahren zur Herstellung eines Materialsystems nach einem der Ansprüche 1 bis 8 auf einem Substrat, mit den folgenden Schritten:
• Bereitstellen eines Substrats,
• Bereitstellen einer Elektrolytlösung, welche Ionen eines Matrixmetalls aufweist,
• Herstellen von Nanopartikeln (3) aus mindestens einem Polymer, wobei die Nanopartikel (3) eine durchschnittliche Größe von weniger als 50 nm aufweisen,
• Beladen der Nanopartikel (3) mit mindestens einem Funktionsträger (4), der ein Metall, Siliciumcarbid, Bornitrid, Aluminiumoxid und/oder Diamant ist,
• Versetzen der Elektrolytlösung mit den beladenen nanopartikeln (3),
• Eintauchen des Substrats in die mit den beladenen Nanopartikeln (3) versetzte Elektrolytlösung und
• Abscheiden der in der Elektrolytlösung enthaltenen Ionen des Matrixmetalls und der beladenen Nanopartikel (3) als Materialsystem auf dem Substrat.

11. Verfahren nach Anspruch 10, **dadurch gekennzeichnet, dass** zwischen dem Substrat und dem Elektrolyt während des Abscheidens eine Relativbewegung erfolgt.

12. Verfahren nach Anspruch 11, **dadurch gekennzeichnet, dass** die Geschwindigkeit der Relativbewegung in einem Bereich zwischen 0 und 15 m/s, insbesondere zwischen 0,1 und 5 m/s und ganz besonders zwischen 0,1 und 2 m/s liegt.

13. Verfahren nach einem der Ansprüche 10 bis 12, **dadurch gekennzeichnet, dass** das Substrat eine Elektrode bildet, die ein Metall aufweist.

14. Verfahren nach Anspruch 13, **dadurch gekennzeichnet, dass** das Metall ausgewählt ist aus der Gruppe bestehend aus Platin, Gold, Silber, Kupfer, Kobalt, Nickel, Eisen, Zinn und Palladium.

15. Verfahren nach einem der Ansprüche 10 bis 14, **dadurch gekennzeichnet, dass** es nach dem Abscheiden einen zusätzlichen Schritt der Nachbehandlung des auf dem Substrat abgeschiedenen Materialsystems umfasst.

## Claims

1. Material system having a matrix (7) and nanoparticles (3) embedded therein, wherein
• the matrix (7) comprises at least one matrix metal,
• the nanoparticles (3) have an average size of less than 50 nm and
• the nanoparticles (3) comprise in each case at least one functional carrier (4) being a metal, silicon carbide, boron nitride, aluminum oxide and/or diamond, and
• the nanoparticles (3) comprise in each case at least one polymer (1).

2. Material system according to claim 1, **characterized in that** the polymer (1) is a dendritically structured polymer.

3. Material system according to claim 1 or 2, **characterized in that** the polymer (1) is polyethyleneimine, polyamidoamine and/or polypropyleneimine.

4. Material system according to any of claims 1 to 3, **characterized in that** the polymer. (1) has a functional group (2).

5. Material system according to claim 4, **characterized in that** the functional group (2) consists of the residue of a hydrocarbon compound, in particular of the residue of glycidol, gluconolactone and/or lactobionic acid, and/or of the residue of a polymer, in particular of polyethyleneimine, polyamidoamine and/or polypropyleneimine.

6. Material system according to any of claims 1 to 5, **characterized in that** the nanoparticles (3) in each case have a core which is at least partially surrounded by a shell.

7. Material system according to claim 6, **characterized in that** the core and the shell are formed by the polymer (1).

8. Material system according to claim 6, **characterized in that** the core is formed by the polymer (1) and the shell is formed by the functional group (2).

9. Component, in particular electric or electronic component, having a coating which has a material system according to any of claims 1 to 8.

10. Method for producing a material system according to any of claims 1 to 8 on a substrate, having the following steps:
• providing a substrate,
• providing an electrolyte solution which has ions of a matrix metal,
• producing nanoparticles (3) from at least one polymer, wherein the nanoparticles (3) have an average size of less than 50 nm,
• loading the nanoparticles (3) with at least one functional carrier (4) being a metal, silicon carbide, boron nitride, aluminum oxide and/or diamond,
• drugging the electrolyte solution with the loaded Nanoparticles (3),
• dipping the substrate into the electrolyte solution drugged with nanoparticles (3) and
• depositing the ions of the matrix metal and of the loaded nanoparticles (3) contained in the electrolyte solution as material system onto the substrate.

11. Method according to claim 10, **characterized in that** during deposition a relative movement between the substrate and the electrolyte is carried out.

12. Method according to claim 11, **characterized in that** the velocity of the relative movement is in a range of between 0 and 15 m/s, in particular of between 0.1 and 5 m/s and especially of between 0.1 and 2 m/s.

13. Method according to any of claims 10 to 12, **characterized in that** the substrate forms an electrode which has a metal.

14. Method according to claim 13, **characterized in that** the metal is chosen from the group consisting of platinum, gold, silver, copper, cobalt, nickel, iron, tin and palladium.

15. Method according to any of claims 10 to 14, **characterized in that** it comprises an additional step of aftertreatment of the material system deposited onto the substrate after the deposition.

## Revendications

1. Système de matériau présentant une matrice (7) et des nanoparticules (3) qui y sont incorporées, où
- la matrice (7) présente au moins un métal de matrice,
- les nanoparticules (3) présentent une grosseur moyenne inférieure à 50 nm,
- les nanoparticules (3) présentent au moins un support fonctionnel (4) qui est un métal, du carbure de silicium, du nitrure de bore, de l'oxyde d'aluminium et/ou du diamant, et
- les nanoparticules (3) présentent à chaque fois au moins un polymère (1).

2. Système de matériau selon la revendication 1, **caractérisé en ce que** le polymère (1) est un polymère à structure dendritique.

3. Système de matériau selon la revendication 1 ou 2, **caractérisé en ce que** le polymère (1) est la polyéthylèneimine, la polyamidoamine et/ou la polypropylèneimine.

4. Système de matériau selon l'une quelconque des revendications 1 à 3, **caractérisé en ce que** le polymère (1) présente un groupe fonctionnel (2).

5. Système de matériau selon la revendication 4, **caractérisé en ce que** le groupe fonctionnel (2) est constitué par le radical d'un composé hydrocarboné, en particulier le radical du glycidol, de la gluconolactone et/ou de l'acide lactobionique, et/ou par le radical d'un polymère, en particulier de polyéthylèneimine, de polyamidoamine et/ou de polypropylèneimine.

6. Système de matériau selon l'une quelconque des revendications 1 à 5, **caractérisé en ce que** les nanoparticules (3) présentent à chaque fois un noyau, qui est entouré au moins partiellement d'une coquille.

7. Système de matériau selon la revendication 6, **caractérisé en ce que** le noyau et la coquille sont formés à partir du polymère (1).

8. Système de matériau selon la revendication 6, **caractérisé en ce que** le noyau est formé à partir du polymère (1) et la coquille est formée à partir du groupe fonctionnel (2).

9. Pièce, en particulier pièce électrique ou électronique, présentant un revêtement qui présente un système de matériau selon l'une quelconque des revendications 1 à 8.

10. Procédé pour la fabrication d'un système de matériau selon l'une quelconque des revendications 1 à 8 sur un substrat, présentant les étapes suivantes :
- mise à disposition d'un substrat,
- mise à disposition d'une solution d'électrolyte, qui présente des ions d'un métal de matrice,
- préparation de nanoparticules (3) à partir d'au moins un polymère, où les nanoparticules (3) présentent une grosseur moyenne inférieure à 50 nm,
- charge des nanoparticules (3) avec au moins un support fonctionnel (4) qui est un métal, du carbure de silicium, du nitrure de bore, de l'oxyde d'aluminium et/ou du diamant, et
- mélange de la solution d'électrolyte avec les nanoparticules chargées (3),
- immersion du substrat dans la solution d'électrolyte mélangée avec les nanoparticules chargées (3) et
- dépôt des ions du métal de matrice contenus dans la solution d'électrolyte et des nanoparticules chargées (3) comme système de matériau sur le substrat.

11. Procédé selon la revendication 10, **caractérisé en ce qu'**un mouvement relatif existe entre le substrat et l'électrolyte pendant le dépôt.

12. Procédé selon la revendication 11, **caractérisé en ce que** la vitesse du mouvement relatif se situe dans une plage entre 0 et 15 m/s, en particulier entre 0,1 et 5 m/s et de manière tout particulièrement préférée entre 0,1 et 2 m/s.

13. Procédé selon l'une quelconque des revendications 10 à 12, **caractérisé en ce que** le substrat forme une électrode qui présente un métal.

14. Procédé selon la revendication 13, **caractérisé en ce que** le métal est choisi dans le groupe constitué par le platine, l'or, l'argent, le cuivre, le cobalt, le nickel, le fer, l'étain et le palladium.

15. Procédé selon l'une quelconque des revendications 10 à 14, **caractérisé en ce qu'**il comprend, après le dépôt, une étape supplémentaire de post-traitement du système de matériau déposé sur le substrat.
